Europäisches Patentamt

(19) **European Patent Office**

**Office européen des brevets**

(11) Numéro de publication: **0 041 889**
**A1**

(12) ## DEMANDE DE BREVET EUROPEEN

(21) Numéro de dépôt: **81400878.5**

(22) Date de dépôt: **02.06.81**

(51) Int. Cl.³: **B 60 R 9/06**
**B 60 R 9/10**

(30) Priorité: **06.06.80 FR 8012578**
**13.02.81 FR 8102815**

(43) Date de publication de la demande:
**16.12.81 Bulletin 81/50**

(84) Etats contractants désignés:
**BE DE GB IT NL**

(71) Demandeur: **Hamel, Jacques Robert**
**112 Ter Avenue de Suffren**
**F-75015 Paris(FR)**

(72) Inventeur: **Hamel, Jacques Robert**
**112 Ter Avenue de Suffren**
**F-75015 Paris(FR)**

(74) Mandataire: **Vander-Heym, Roger**
**172 Boulevard Voltaire**
**F-75011 Paris(FR)**

(54) **Porte-bagages pour véhicules automobiles.**

(57) Porte-bagages du genre de ceux comportant une armature constituée par des montants (1), réunis par des traverses (4), susceptible d'être fixé derrière un véhicule automobile, caractérisé en ce que les montants (1) supportent, à leur partie inférieure, au moins, une traverse (4) située dans un plan perpendiculaire auxdits montants, (1) sur laquelle peuvent reposer des bagages, ladite traverse (4) comportant à chacune de ses extrémités un bras coulissant, (5) affectant une section en forme d'U, sur lequel peut reposer la roue d'une bicyclette.

Fig.1

EP 0 041 889 A1

La présente invention est relative à un porte-bagages, pour véhicules automobiles, du genre de ceux pouvant être transformés en porte-vélos.

L'état de la technique en la matière est constitué par le porte-bagages décrit dans le brevet Américain N° 3.710.999. Le porte-bagages décrit dans ce brevet se fixe derrière un véhicule en deux points, à savoir : à la partie supérieure du coffre arrière et sur le bord inférieur du pare-chocs. Ce mode de fixation nécessite le démontage du porte-bagages pour accéder au coffre.

Par le brevet Américain N° 3. 877.622 et par la demande de brevet Français N° 79 06 699 du 16 Mars 1979, publiée sous le N° 2 451 296, on connaît des supports destinés à recevoir des bicyclettes, constitués principalement par des montants réunis par des traverses, qui se fixent sur le pare-chocs du véhicule. Ces supports ne peuvent pas recevoir un bagage tel qu'une valise.

La présente invention est relative à un porte-bagages du genre de ceux comportant des montants, réunis par des traverses, susceptibles d'être fixés au pare-chocs d'un véhicule automobile. Ce pare-chocs est remarquable en ce que ses montants supportent,au moins, une traverse située dans un plan perpendiculaire aux dits montants constituant une surface d'appui pour un bagage, ladite traverse comportant à chacune de ses extrémités un bras coulissant à section en forme d'U sur lequel peut reposer la roue d'une bicyclette. De préférence, on utilisera deux traverses de façon à pouvoir transporter deux bicyclettes.

L'invention sera mieux comprise par la description qui va suivre faite en se référant aux dessins annexés à titre d'exemple indicatif seulement,sur lesquels:

Les figures 1 et 2 sont des vues en perspective du porte-bagages montrant la possibilité de recevoir soit des bagages soit une bicyclette.

La figure 3 est une vue de côté du porte-bagages le montrant en position pliée;

La figure 4 est une vue partielle en perspective montrant une variante de réalisation ;

La figure 5 est une vue partielle à plus grande échelle et en coupe montrant un détail de réalisation;

La figure 6 est une vue analogue à la figure 1 montrant une variante de réalisation;

La figure 7 est une vue partielle et à plus grande échelle, en élévation coupe, montrant l'immobilisation d'une roue de bicyclette dans le cas d'un porte-bagages conforme au mode de réalisation de la figure 6;

La figure 8 est une vue en élévation montrant le transport d'une bicyclette d'enfant dans le cas d'un porte-bagages conforme au mode de réalisation de la figure 6;

La figure 9 est une vue analogue à celle 8 montrant le transport de bagages;

La figure 10 est une vue partielle en perspective montrant un détail de réalisation.

En se reportant aux dessins, on voit que le porte-bagages est constitué par une armature d'un type connu comportant deux montants 1 et, au moins, deux traverses 2a-2b.

Cette armature est destinée à être fixée de façon amovible derrière un véhicule et ce, par tous moyens connus et c'est la raison pour laquelle ces moyens n'ont pas été représentés sur les dessins.

Selon un mode de réalisation, non représenté, chaque montant peut être fixé, par son extrémité inférieure, au pare-chocs arrière du véhicule à l'aide du dispositif décrit dans la demande de brevet français précitée N° 79 06 699 du 16 Mars 1979, publiée sous le N° 2.451.296.

Selon l'invention, les montants présentent vers leur partie inférieure des potences 3, réunies par, au moins , une traverse 4 formant un fourreau de guidage de bras latéraux 5 coulissants, affectant une section en forme d'U.

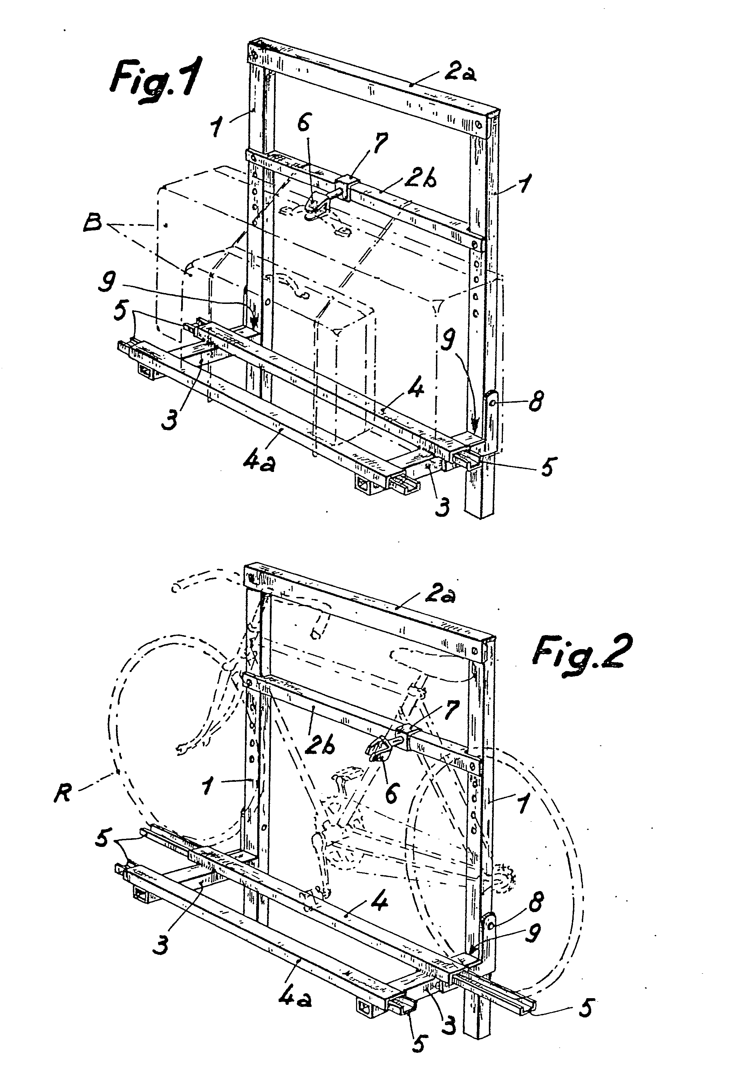

En se reportant à la figure 1, on voit que les traverses 4 forment une surface d'appui sur laquelle on peut fixer des bagages B.

Pour transformer le porte-bagages en un porte-bicyclette, tel que montré sur la figure 2, il suffit de faire coulisser les bras 5 hors des traverses 4. Dans cette position, les bras forment des gouttières dans chacune desquelles peut reposer la roue R de la bicyclette.

De la façon connue, le maintien de la bicyclette est assuré par un collier ouvert 6, élastiquement déformable dont le support 7 peut coulisser le long de la traverse 2b.

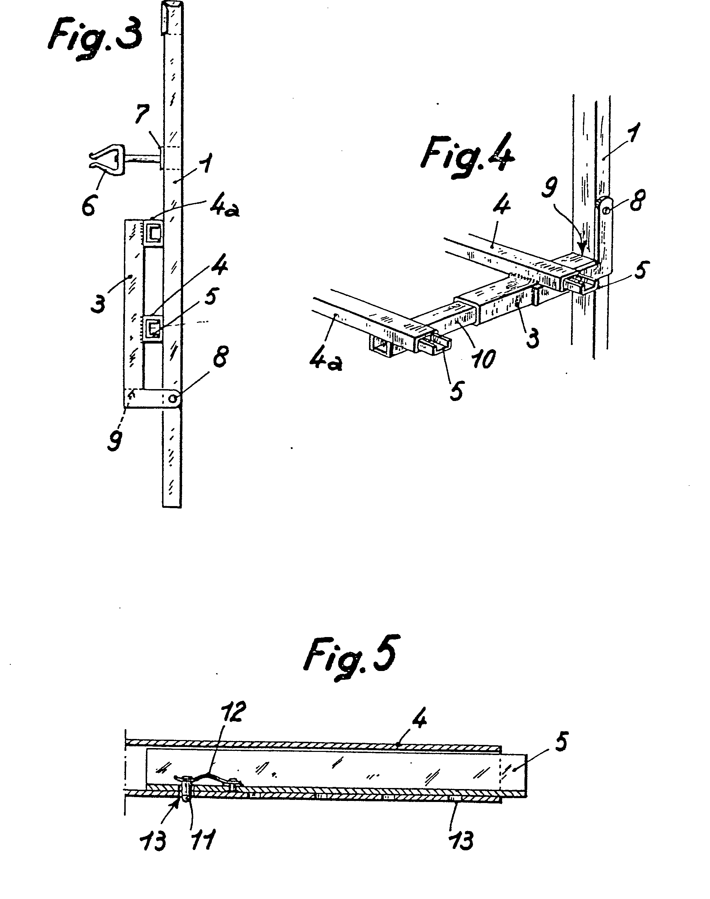

Selon une autre caractéristique de l'invention, les potences 3 sont articulées sur les montants 1 au moyen d'axes 8 situés au-dessus du plan formé par les traverses 4, ce qui permet le rabattement de celles-ci le long desdits montants ( figure 3). En position d'utilisation, chaque potence prend appui par son talon 9 contre le montant correspondant.

Selon une variante, chaque potence 3 constitue également un fourreau dans lequel peut coulisser un bras 10 rendu solidaire de la traverse 4a, cette disposition permettant de faire varier la surface de réception des bagages ( figure 4).

Naturellement, des moyens sont prévus pour limiter le déplacement des bras 5. Ainsi, comme montré sur la figure 5, on peut utiliser un doigt 11 fixé à l'extrémité d'une lame 12 élastiquement déformable, rendue solidaire du bras, susceptible de s'engager dans des trous 13 des traverses 4. Des moyens analogues peuvent être utilisés pour limiter le coulissement des bras 10 dans les potences 3.

Il faut signaler que tous moyens peuvent être utilisés pour limiter le pivotement des potences vers le bas et les maintenir dans un plan sensiblement perpendiculaire aux montants.

Selon un autre mode de réalisation, les potences 3 sont réunies par, au moins, une paire de traverses 14 tubulaires, parallèles, constituant deux fourreaux dans chacun desquels peut coulisser la branche 15 correspondante d'une armature en forme de V constituant un bras de support immobilisé dans les traverses 14 par des vis 16.

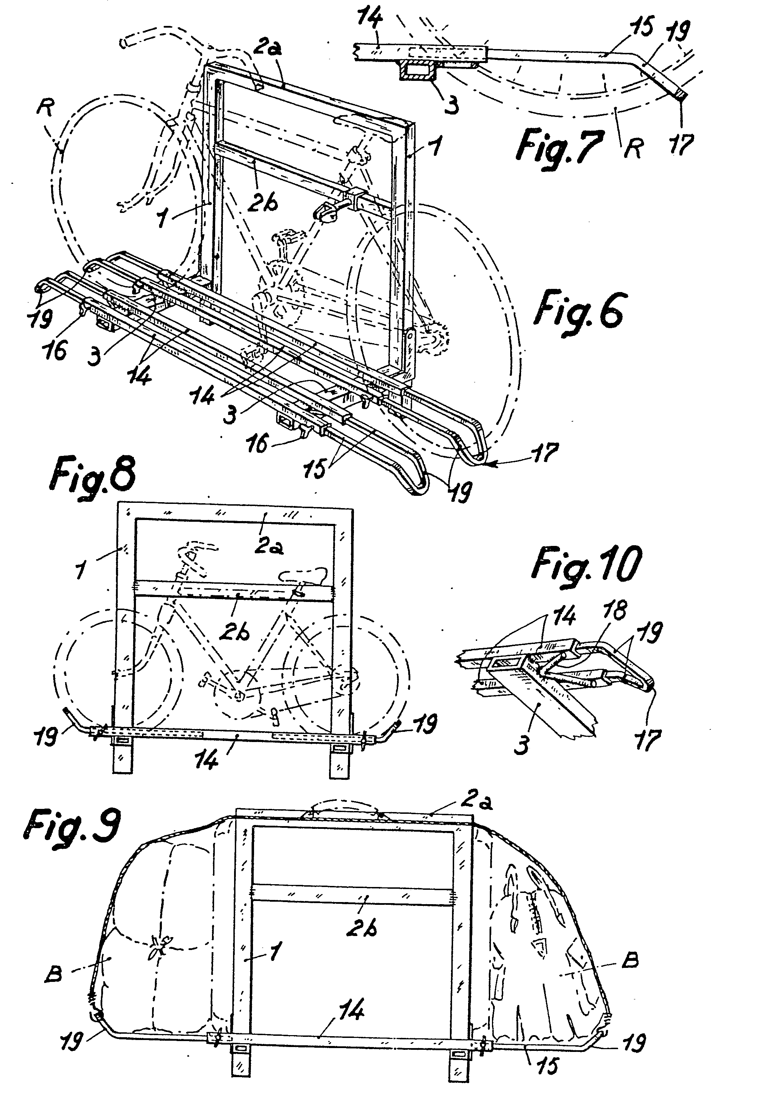

La distance séparant les deux branches 15 est déterminée de façon à pouvoir engager entre elles une roue R de bicyclette.Comme montré sur la figure 7, on voit que lorsqu'une bicyclette est posée sur ce porte-bagages, chaque roue est immobilisée entre deux butées s'opposant à son déplacement dans son plan à savoir celle constituée par l'extrémité 17 du bras coulissant et celle constituée par la potence 3. En toute rigueur, cette dernière butée est constituée par une petite ferrure 18, en forme de V réunissant les traverses 14 correspondantes ( figure 10).

Selon une autre caractéristique de ce mode de réalisation, l'extrémité du bras coulissant comporte une partie coudée 19; cette conformation offre les avantages suivants :

a) lorsque la partie 19 est dirigée vers le bas, la roue R peut s'étendre de façon plus importante vers le bas. De ce fait, l'ensemble de la bicyclette se trouve abaissé par rapport à la surface portante délimitée par les traverses 14 et il est alors possible de réduire la hauteur des montants d'où un gain en matière. Un gain en matière est aussi obtenu lors de la réalisation des bras en forme de V puisque ceux-ci peuvent être plus courts. En effet, en considérant la figure 7, on voit que si les bras 15 étaient rectilignes, ils devraient être beaucoup plus longs pour une même pénétration de la roue. Cette disposition augmente donc aussi la rigidité de l'ensemble.

b) lorsque les parties coudées 19 s'étendent vers le haut, par retournement des bras en V, il est possible de transporter un bicyclette d'enfant tout en assurant une bonne immobilisation latérale par rapport au véhicule ( figure 8).

Enfin et comme montré sur la figure 9, on voit que les parties 19 peuvent constituer aussi des bordures de contenance lors du transport de bagages B.

Bien entendu, la présente invention ne se limite pas aux modes de réalisation décrits et représentés mais s'étend, au contraire, à toutes variantes de formes et dimensions.

C'est ainsi, entre autres, que la butée constituée par la ferrure 18 peut être prévue sur les bras 15.

REVENDICATIONS

1-Porte-bagages du genre de ceux comportant une armature, constituée par des montants réunis par des traverses, susceptible d'être fixée derrière un véhicule automobile, caractérisé en ce que les montants (1) supportent, à leur partie inférieure, au moins une traverse (4) située dans un plan perpendiculaire auxdits montants, sur laquelle peuvent reposer des bagages, ladite traverse comportant à chacune de ses extrémités un bras coulissant (5), affectant une section en forme d'U, sur lequel peut reposer la roue (R) d'une bicyclette.

2-Porte-bagages selon la revendication 1,caractérisé en ce que la traverse est fixée sur deux potences (3) rendues solidaires par une de leurs extrémités de la partie inférieure du montant correspondant de l'armature.

3-Porte-bagages selon la revendication 2, caractérisé en ce que chaque potence est articulée sur son montant de support de façon à pouvoir se rabattre le long dudit montant en position de pliage.

4-Porte-bagages selon la revendication 3,caractérisé en ce que les axes d'articulation des potences sont situés au-dessus du plan défini par lesdites potences.

5-Porte-bagages selon l'une quelconque des revendications 1 à 4, caractérisé en ce que les potences supportent, au moins, deux traverses et en ce que l'une au moins des traverses est rendue solidaire de deux bras (10) pouvant coulisser dans leur potence (3) correspondante.

6-Porte-bagages pour véhicules automobiles,selon l'une quelconque des revendications précédentes,caractérisé en ce que chaque bras est constitué par une armature sensiblement en forme de V, entre les branches (15) de laquelle peut être engagée une roue de bicyclette ou analogue qui se trouve immobilisée, axialement entre lesdites branches et, dans son plan, entre deux points de butée dont l'un est constitué par l'extrémité en V (17) dudit bras tandis que l'autre est constitué, par exemple, par la potence (3) supportant les traverses (14) dans lesquelles coulissent et peuvent être immobilisées lesdites
branches.

7-Porte-bagages selon la revendication 6, caractérisée en ce que l'extrémité de chaque bras est recourbée pour s'étendre hors du plan défini par les deux branches (15) dudit bras.

8-Porte-bagages selon l'une quelconque des revendications 6 et 7, caractérisé en ce que chaque potence
(3) est pourvue d'une ferrure (18) en forme de V constituant la seconde butée dont la première est formée
par l'extrémité (17) du bras correspondant.

9-Porte-bagages selon l'une quelconque des revendications 6 à 8, caractérisé en ce que le second point
de butée de la roue est porté par les branches (15)
du bras correspondant.

Fig.1

Fig.2

**Fig.3**

**Fig.4**

**Fig.5**

Fig.7

Fig.6

Fig.8

Fig.10

Fig.9

# 0041889

Numéro de la demande

## Office européen des brevets

### RAPPORT DE RECHERCHE EUROPEENNE

EP 81 40 0878.5

## DOCUMENTS CONSIDERES COMME PERTINENTS

| Catégorie | Citation du document avec indication, en cas de besoin, des parties pertinentes | Revendication concernée |
|---|---|---|
| | FR – A1 – 2 430 873 (A. COLLET) <br> * fig. 1 * <br><br> -- | 1 |
| | FR – A1 – 2 428 542 (J. SCHER) <br> * fig. 1, 2 * <br><br> -- | 1 |
| | FR – A1 – 2 422 526 (J.-G. LAGUILLIER) <br> * fig. * <br><br> -- | 1 |
| | CA – A – 1 027 527 (B. LESPERANCE) <br> * fig. 1, 2 * <br><br> -- | 1 |
| | US – A – 3 796 333 (K.W. GOLDSTEIN) <br> * fig. 1 * <br><br> -- | 1 |
| P,D, A | FR – A1 – 2 451 296 (J.R. HAMEL) <br><br> -- | |
| D,A | US – A – 3 877 622 (P.E. McLAIN) <br><br> -- | |
| D,A | US – A – 3 710 999 (R.A. ALLEN) <br><br> ---- | |

### CLASSEMENT DE LA DEMANDE (Int. Cl.³)

B 60 R    9/06

B 60 R    9/10

### DOMAINES TECHNIQUES RECHERCHES (Int. Cl.³)

B 60 R    9/00

### CATEGORIE DES DOCUMENTS CITES

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

| | | | |
|---|---|---|---|
| X | Le présent rapport de recherche a été établi pour toutes les revendications | | |
| Lieu de la recherche <br> Berlin | Date d'achèvement de la recherche <br> 05-08-1981 | Examinateur <br> BECKER | |

OEB Form 1503.1    06.78